# EUROPÄISCHE PATENTSCHRIFT

(11) **EP 0 582 770 B1**
(45) Veröffentlichungstag und Bekanntmachung des Hinweises auf die Patenterteilung: **04.12.1996**
(21) Anmeldenummer: 93101997.0
(22) Anmeldetag: 09.02.1993
(51) Int. Cl.: B29C 43/30, D06N 7/00

(54) **Mehrfarbig gemusterter Bodenbelag sowie Verfahren zu seiner Herstellung**
Multicoloured patterned floor covering and method for its manufacture
Revêtement de sol, multicolore, à motifs et son procédé de fabrication

(30) Priorität: 13.08.1992 DE 4226766
(43) Veröffentlichungstag der Anmeldung: 16.02.1994
(73) Patentinhaber: Firma Carl Freudenberg, D-69469 Weinheim (DE)
(72) Erfinder: Heckel, Klaus, Dr., W-6946 Gorxheimertal (DE); Rischer, Dieter, W-6941 Absteinach (DE); Graab, Gerhard, Dr., W-6800 Mannheim 24 (DE)

(56) Entgegenhaltungen:
- EP-A- 0 227 029
- FR-A- 1 167 760
- FR-A- 2 627 518
- US-I- B 579 153

## Beschreibung

Die Erfindung betrifft einen mehrfarbig gemusterten Bodenbelag einer Dicke von 1 bis 4 mm, bestehend aus einer Bahn, die eine erste Farbe aufweist, und aus einem abweichend von der Bahn eingefärbten Granulat, das zumindest im Bereich der Oberseite in einer im wesentlichen gleichmäßigen Verteilung in die Bahn eingebettet ist, sowie ein Verfahren zu dessen Herstellung.

FR-PS 1.167.760 beschreibt einen solchen Bodenbelag. Eine Vielzahl hierfür verwendbarer, thermoplastischer Polymerer wird angegeben. Der Einsatz von Polyvinylchlorid wird bevorzugt.

Diese französische Patentschrift beschreibt auch ein Verfahren zur Herstellung eines solchen Bodenbelags, insbesondere aus PVC, bei dem zumindest zwei abweichend gefärbte Fraktionen des Ausgangswerkstoffs unter Verwendung eines zwei gegensinnig und mit gleicher Geschwindigkeit umlaufende Walzen mit übereinstimmenden Durchmessern aufweisenden Walzenkalanders in die Gestalt einer Bahn überführt werden. Dabei werden die Granulate unter Druck in ein thermoplastisches Grundmaterial eingepreßt, anschließend das Ganze zumindest bis zur Erweichungstemperatur des Grundmaterials erhitzt und wieder verpreßt, so daß letzteres die Partikeln allseitig umschließt.

Bei der Herstellung solcher Bodenbeläge ergibt sich das Problem, daß die stets anfallenden Abfallstücke aus Randbeschnitt und Produktionsresten die jeweils verwendeten Farbtöne aufweisen und daher nicht im gleichen Verfahrensprozeß sowie nur in beschränktem Maße für andere Recyclingprodukte einsetzbar sind.

Die vorliegende Erfindung hat zur Aufgabe, einen gattungsgemäßen Bodenbelag zu entwickeln, dessen bei der Herstellung entstehende Abfallstücke im gleichen Verfahren vollständig wieder einsetzbar sind. Ferner hat die Erfindung zur Aufgabe, ein Herstellungsverfahren anzugeben, bei dessen Durchführung alle Abfallstücke wieder in den gleichen Herstellungsprozeß rückführbar sind.

Die Lösung dieser Aufgabe besteht in einem gattungsgemäßen Bodenbelag mit den kennzeichnenden Merkmalen des ersten Patentanspruchs. Vorteilhafte Ausgestaltungen sind in den Unteransprüchen angegeben; ebenso wird ein Verfahren offenbart, um einen solchen Bodenbelag herzustellen.

Der Bodenbelag besitzt eine Dicke von 1 bis 4 mm und besteht aus einer Bahn, die eine erste Farbe aufweist. In diese Bahn ist Granulat zumindest im Bereich der Oberseite eingebettet in einer im wesentlichen gleichmäßigen Verteilung.

Bahn und Granulat bestehen aus durch Vulkanisation vernetzbarem Elastomermaterial, wobei das Granulat zumindest zwei voneinander und von der Bahn abweichend eingefärbte Fraktionen von Partikeln umfaßt und wobei die Menge und Farbe der Fraktionen so gewählt ist, daß die sich bei einer homogenen Durchmischung aller in dem Bodenbelag enthaltenen Bestandteile ergebende Mischfarbe und die erste Farbe im wesentlichen übereinstimmen.

Die einzelnen, in die Bahn eingelassenen Farbflächen liegen scharfkantig allseitig getrennt vor. Zweckmäßig sind innerhalb 25 cm² Fläche stets annähernd gleich viele Flächen-Teile verschiedener Farben vertreten. Dabei sollen die eingelassenen Farbflächen 1 bis 25 mm² betragen. Kleinere eingenommene Flächen wären optisch nicht mehr ansprechend, und Werte über 25 mm² würden nicht mehr gewährleisten, daß bis hinab zu 25 cm² Bodenbelagsfläche noch genügend verschiedene Farben vorhanden sind, um die Mischfarbe der Bahn bei additiver Mischung zu ergeben.

Alle bekannten, für Bodenbeläge geeigneten, vulkanisierbaren Elastomere können im Sinne der vorliegenden Erfindung Verwendung finden, so z. B. solche mit den genormten Bezeichnungen SBR, NBR, EPDM oder Naturkautschuk sowie Abmischungen hiervon.

Eine vorteilhafte Ausführungsform, insbesondere im Hinblick auf das Verhältnis von Materialmenge zum erzielbaren besonderen farblichen und schmutzkaschierenden Effekt des Belags, sieht drei verschiedene in die Bahn eingelassene Farbflächen als Muster vor. Diese Ausführungsform ergibt eine optisch besonders ansprechende Musterung bei vertretbarem Materialeinsatz.

Eine besonders vorteilhafte Ausgestaltung des Bodenbelags ist dadurch gekennzeichnet, daß die in den Fraktionen enthaltenen Partikel nach Menge und Farbe so aufeinander abgestimmt sind, daß die sich bei ihrer homogenen Durchmischung ergebende Mischfarbe und die erste Farbe im wesentlichen übereinstimmen. Bei dieser Ausführungsform trägt die Mischfarbe der Belagsbahn beim Wiedereinsatz von Abfallstücken nicht mehr zur neuerlich entstehenden Grundfarbe bei; diese wird allein durch die in den Fraktionen enthaltenen, mehrfarbigen Partikel beeinflußt. Somit ist der bei Wiederverwendung der Abfallstücke entstehende Farbton exakt vorausbestimmbar.

Die FR-A-1 167 760 befaßt sich mit einem Verfahren zur Herstellung von Bodenbelägen aus thermoplastischen Materialien. Es ist jedoch auch zur Herstellung des vorliegenden, elastomeren Bodenbelags anwendbar, wobei in beiden Fällen ein Granulat unter Verwendung eines Walzenkalanders mit einem Bahnmaterial zu einer Bahn vereinigt wird, die durch eine sich anschließende Vulkanisierung verfestigt wird.

Bei der vorliegenden Erfindung besteht das Granulat jedoch aus zumindest zwei voneinander und von dem Bahnmaterial abweichend eingefärbten Fraktionen, wobei die Menge und Farbe der Fraktionen so gewählt sind, daß die sich bei einer homogenen Durchmischung aller in dem Bodenbelag enthaltenen Bestandteile ergebende Mischfarbe und die Farbe des Bahnmaterials im wesentlichen übereinstimmen.

Die Einbrinung der Farbflächen in das Bahnmaterial geschieht zweckmäßig mit bekannten Aufstreueinrichtungen für zerkleinerte Rohmischungen auf einer kontinuierlichen Vulkanisationsmaschine oder einer Presse bei 160 bis 190°C unter Druck. Dabei werden die Granulate so gut in die Grundplatte eingebunden, daß diese beim Dornbiegeversuch nach DIN 51 949 bei einem Dorn von 20 mm Durchmesser und einer Materialdicke von 2 mm keine Trennung an der Korngrenze zwischen den aufgestreuten Teilen und dem Grundmaterial mehr aufweisen. Die Farbteile bilden also mit der Oberfläche der Grundplatte eine einzige, lückenfreie Ebene.

Zweckmäßig werden zwischen 80 und 450 g/m² an Farbpartikeln auf die Bahn aufgestreut. Die Partikelgröße ist dabei so zu wählen, daß der fertige Belag diskrete Farbflächen zwischen 1 und 25 mm² aufweist. Geht man so vor, enthalten Flächeneinheiten des Bodenbelags bis hinab zu 25 cm² annähernd gleich viele Teile verschiedener Farben. So ist gewährleistet` daß - wenn der Farbton der Grund-Bahn in etwa additiv aus jeweils gleichen Farbanteilen der eingestreuten Partikel besteht - beim Herstellungsprozeß anfallende Randbeschnitte und Abfälle im gleichen Verfahren wieder der Herstellung zugeführt werden können, weil während des intensiven Mischprozesses im Extruder oder auf dem Mischwalzwerk bei der Bahnherstellung additiv die Basisfarbe der Grundplatte wieder entsteht.

Der herstellungsbedingte, mehrfarbige Abfall kann also vollständig und, was besonders wichtig ist, in schwankenden Mengen dem gleichen Herstellungsverfahren in-line wieder zugeführt werden, ohne daß Farbschwankungen in Endprodukt auftreten.

Das Verfahren erlaubt ein kantenscharfes, lückenfreies Einpressen des Granulats in die Bahn.

## Patentansprüche

1. Mehrfarbig gemusterter Bodenbelag einer Dicke von 1 bis 4 mm, bestehend aus einer Bahn, die eine erste Farbe aufweist, und aus einem abweichend von der Bahn eingefärbten Granulat, das zumindest im Bereich der Oberseite in einer im wesentlichen gleichmäßigen Verteilung in die Bahn eingebettet ist, dadurch gekennzeichnet, daß die Bahn und das Granulat aus vernetzbaren Elastomeren bestehen, daß das Granulat zumindest zwei voneinander und von der Bahn abweichend eingefärbte Fraktionen von Partikeln umfaßt und daß die Menge und Farbe der Fraktionen so gewählt ist, daß die sich bei einer homogenen Durchmischung aller in dem Bodenbelag enthaltenen Bestandteile ergebende Mischfarbe und die erste Farbe im wesentlichen übereinstimmen.

2. Bodenbelag nach Anspruch 1, dadurch gekennzeichnet, daß er als Muster Flächenbereiche mit drei verschiedenen Farben besitzt.

3. Bodenbelag nach Anspruch 1 bis 2, dadurch gekennzeichnet, daß die in den Fraktionen enthaltenen Partikel nach Menge und Farbe so aufeinander abgestimmt sind, daß die sich bei ihrer homogenen Durchmischung ergebende Mischfarbe und die erste Farbe im wesentlichen übereinstimmen.

4. Verfahren zur Herstellung eines mehrfarbig gemusterten Bodenbelags aus vernetzbaren Elastomeren nach einem der Ansprüche 1 bis 3, bei dem zumindest zwei voneinander und von einem Bahnmaterial abweichend eingefärbte Fraktionen eines Ausgangswerkstoffes in Form von Granulaten voneinander getrennt überführt, miteinander vermischt und in einen Walzenkalander eingegeben werden, wo sie mit dem Bahnmaterial zu einer Bahn vereinigt werden, die durch eine sich anschließende Vulkanisierung verfestigt wird, wobei die Menge und Farbe Farbe der Fraktionen so gewählt werden, daß die sich bei einer homogenen Durchmischung aller in dem Bodenbelag enthaltenen Bestandteile ergebende Mischfarbe und die Farbe des Bahnmaterials im wesentlichen übereinstimmen.

## Claims

1. A multicoloured patterned floor covering of a thickness of from 1 to 4 mm, comprising a web of a first colour and granules pigmented in a colour different from that of the web and embedded in the web, at least in the region of the upper side, in a substantially uniform distribution, characterized in that the web and the granules consist of crosslinkable elastomers, in that the granules comprise at least two fractions of particles pigmented in colours different from one another and different from that of the web and in that the quantity and colour of the fractions is chosen such that the mixed colour, obtained from homogeneous intermixing of all the constituents contained in the floor covering, and the first colour substantially match.

2. A floor covering according to claim 1, characterized in that it has as a pattern surface areas with three different colours.

3. A floor covering according to either of claims 1 and 2, characterized in that the particles contained in the fractions are coordinated with one another in terms of quantity and colour such that the mixed colour, obtained from their homogeneous intermixing, and the first colour substantially match.

4. A method for manufacturing a multicoloured patterned floor covering from crosslinkable elastomers according to any one of claims 1 to 3, in which at least two fractions of a starting material pigmented in colours different from one another and different from that of a web material are transformed separately from one another into granules, are mixed with one another and are introduced into a roll calender, where they are combined with the web material to form a web, which is consolidated by subsequent vulcanizing, the quantity and colour of the fractions being chosen such that the mixed colour, obtained from a homogeneous intermixing of all the constituents contained in the floor covering, and the colour of the web material substantially match.

## Revendications

1. Revêtement de sol multicolore, a motifs, d'une épaisseur de 1 à 4 mm, constitué d'un lé d'une première couleur et d'un granulé d'une couleur divergente du lé qui, tout au moins au niveau de la face supérieure, est intégré au lé selon une répartition essentiellement régulière, caractérisé en ce que le lé et le granulé sont constitués d'élastomères réticulables, en ce que le granulé comprend au moins deux fractions de particules dont la couleur diverge d'une fraction à l'autre ainsi que de la couleur du lé, et en ce que la quantité et la couleur des fractions sont choisies de telle sorte que la couleur mixte résultant d'un mélange homogène de tous les composants contenus dans le revêtement de sol et la première couleur soient essentiellement identiques.

2. Revêtement de sol selon la revendication 1, caractérisé en ce qu'il comporte, en tant que motifs, des surfaces tricolores.

3. Revêtement de sol selon les revendications 1 à 2, caractérisé en ce que les particules contenues dans les fractions sont adaptées l'une à l'autre selon leur quantité et leur couleur de façon à ce que la couleur mixte résultant de leur mélange homogène et la première couleur soient essentiellement identiques.

4. Procédé de fabrication d'un revêtement de sol multicolore, à motifs, en élastomères réticulables selon l'une des revendications 1 à 3, pour lequel au moins deux fractions d'un matériau d'origine réalisées sous forme de granulés et dont la couleur diverge d'une fraction à l'autre ainsi que de la couleur d'un lé sont acheminées individuellement l'une de l'autre, mélangées l'une à l'autre et introduites dans une calandre à rouleaux au sein de laquelle elles sont associées au matériau du lé pour former un lé qui est durci lors d'une vulcanisation consécutive, la quantité et la couleur des fractions étant choisies de telle façon que la couleur mixte résultant d'un mélange homogène de tous les composants contenus dans le revêtement de sol et la couleur du matériau du lé soient essentiellement identiques.
